(19) **Europäisches Patentamt**
**European Patent Office**
**Office européen des brevets**

(11) **EP 4 253 433 A1**

(12) # EUROPEAN PATENT APPLICATION
published in accordance with Art. 153(4) EPC

(43) Date of publication:
**04.10.2023 Bulletin 2023/40**

(21) Application number: **21898005.0**

(22) Date of filing: **24.11.2021**

(51) International Patent Classification (IPC):
*C08F 220/06* (2006.01)     *C08F 220/26* (2006.01)
*C08F 220/44* (2006.01)     *H01M 4/02* (2006.01)
*H01M 4/04* (2006.01)     *H01M 4/13* (2010.01)
*H01M 4/139* (2010.01)     *H01M 50/409* (2021.01)

(52) Cooperative Patent Classification (CPC):
**C08F 220/06; C08F 220/26; C08F 220/44;**
**H01M 4/02; H01M 4/04; H01M 4/13; H01M 4/139;**
**H01M 50/409;** Y02E 60/10

(86) International application number:
**PCT/JP2021/043080**

(87) International publication number:
**WO 2022/114033 (02.06.2022 Gazette 2022/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.11.2020 JP 2020199187**

(71) Applicant: **Zeon Corporation**
**Tokyo 100-8246 (JP)**

(72) Inventors:
• **KITAZAWA Yuzo**
  **Tokyo 100-8246 (JP)**
• **MATSUNO Hirohiko**
  **Tokyo 100-8246 (JP)**

(74) Representative: **Maiwald GmbH**
**Elisenhof**
**Elisenstraße 3**
**80335 München (DE)**

(54) **BINDER FOR SECONDARY BATTERY FUNCTIONAL LAYER, SLURRY COMPOSITION FOR SECONDARY BATTERY FUNCTIONAL LAYER, SECONDARY BATTERY FUNCTIONAL LAYER, AND SECONDARY BATTERY**

(57) Provided is a binder for a secondary battery functional layer that can form a functional layer having excellent heat shrinkage resistance and electrolyte solution affinity. The binder for a secondary battery functional layer contains a particulate polymer including a cyano group-containing monomer unit, a cyclic ether-containing monomer unit, and a carboxyl group-containing monomer unit. The proportional content of the cyclic ether-containing monomer unit in the particulate polymer is 5 mass% or more.

EP 4 253 433 A1

**Description**

TECHNICAL FIELD

The present disclosure relates to a binder for a secondary battery functional layer, a slurry composition for a secondary battery functional layer, a functional layer for a secondary battery, and a secondary battery.

BACKGROUND

Secondary batteries such as lithium ion secondary batteries have characteristics such as compact size, light weight, high energy-density, and the ability to be repeatedly charged and discharged, and are used in a wide range of applications. A secondary battery generally includes battery members such as electrodes (positive electrode and negative electrode) and a separator that isolates the positive electrode and the negative electrode from each other and prevents short-circuiting between the positive and negative electrodes.

A battery member of a secondary battery may be a member that includes a functional layer containing a binding material and optionally containing particles that are compounded in order to cause the battery member to display a desired function (hereinafter, referred to as "functional particles").

Specifically, a separator that includes an adhesive layer containing a binding material and/or a porous membrane layer containing a binding material and non-conductive particles as functional particles on a separator substrate may be used as a separator of a secondary battery. Moreover, an electrode that includes an adhesive layer and/or porous membrane layer such as described above on an electrode substrate having an electrode mixed material layer provided on a current collector may be used as an electrode of a secondary battery.

Attempts have previously been made to enhance binding materials in order to achieve further improvement of secondary battery performance. For example, Patent Literature (PTL) 1 discloses a binder for a non-aqueous secondary battery functional layer containing a particulate polymer that includes a (meth)acrylic acid alkyl ester monomer unit, an aromatic monovinyl monomer unit, an epoxy/N-methylol cross-linkable monomer unit, and a polyvalent ethylenically unsaturated cross-linkable monomer unit in specific proportions and that has a degree of swelling in non-aqueous electrolyte solution that is within a specific range. PTL 1 discloses that by using this binder, it is possible to form a functional layer having excellent adhesiveness both before and after immersion in electrolyte solution and to enhance life characteristics of a non-aqueous secondary battery including this functional layer.

CITATION LIST

Patent Literature

PTL 1: JP6515574B2

SUMMARY

(Technical Problem)

There is demand for thickness reduction of battery members in order to increase secondary battery capacity. However, there is room for improvement of a functional layer formed using the binder of the conventional technique described above in terms of heat shrinkage resistance in a situation in which the thickness of the functional layer is reduced.

There is also demand for densification of secondary batteries in order to increase secondary battery capacity. However, densification of a secondary battery may result in reduction of the rate of injection of electrolyte solution during secondary battery production (i.e., reduction of electrolyte solution injectability of the secondary battery). In order to enable densification of a secondary battery while also ensuring sufficiently high electrolyte solution injectability, it is desirable to increase the affinity with electrolyte solution (hereinafter, also referred to as "electrolyte solution affinity") of a functional layer that is included in the secondary battery. However, there is room for improvement of electrolyte solution affinity of a functional layer that is formed using the binder of the conventional technique described above.

Accordingly, one object of the present disclosure is to provide a binder for a secondary battery functional layer that can form a functional layer having excellent heat shrinkage resistance and electrolyte solution affinity.

Another object of the present disclosure is to provide a slurry composition for a secondary battery functional layer that can form a functional layer having excellent heat shrinkage resistance and electrolyte solution affinity.

Another object of the present disclosure is to provide a functional layer for a secondary battery that has excellent heat shrinkage resistance and electrolyte solution affinity.

Another object of the present disclosure is to provide a secondary battery that includes this functional layer.

(Solution to Problem)

The inventors conducted diligent investigation with the aim of solving the problems set forth above. The inventors reached a new finding that the heat shrinkage resistance and electrolyte solution affinity of a functional layer can be increased by using a binder that contains a specific particulate polymer, and, in this manner, completed the present disclosure.

Specifically, the present disclosure aims to advantageously solve the problems set forth above, and a presently disclosed binder for a secondary battery functional layer comprises a particulate polymer, wherein the particulate polymer includes a cyano group-containing monomer unit, a cyclic ether-containing monomer unit, and a carboxyl group-containing monomer unit, and proportional content of the cyclic ether-containing monomer unit in the particulate polymer is 5 mass% or more. By using a binder that contains a particulate polymer having the specific chemical composition set forth above, it is possible to form a functional layer having excellent heat shrinkage resistance and electrolyte solution affinity.

The phrase "includes a monomer unit" as used in the present disclosure means that "a polymer obtained with the monomer includes a repeating unit derived from the monomer". Moreover, the "proportional content (mass%)" of each monomer unit (each repeating unit) included in a polymer referred to in the present disclosure can be measured by a nuclear magnetic resonance (NMR) method such as $^1$H-NMR or $^{13}$C-NMR.

In the presently disclosed binder for a secondary battery functional layer, the proportional content of the cyclic ether-containing monomer unit in the particulate polymer is preferably 40 mass% or less. When the proportional content of the cyclic ether-containing monomer unit in the particulate polymer is not more than the specific value set forth above, heat shrinkage resistance and electrolyte solution affinity of a functional layer can be further improved, and adhesiveness of the functional layer can be increased.

In the presently disclosed binder for a secondary battery functional layer, the particulate polymer preferably has one glass-transition temperature. When the number of glass-transition temperatures of the particulate polymer is one, adhesiveness of a functional layer can be increased.

In the presently disclosed binder for a secondary battery functional layer, the particulate polymer preferably has a glass-transition temperature of 20°C or lower. When the glass-transition temperature of the particulate polymer is not higher than the specific value set forth above, adhesiveness of a functional layer can be increased.

Note that the "glass-transition temperature" of the particulate polymer referred to in the present disclosure can be measured by a method described in the EXAMPLES section of the present specification.

In the presently disclosed binder for a secondary battery functional layer, proportional content of the cyano group-containing monomer unit in the particulate polymer is preferably not less than 2 mass% and not more than 30 mass%. When the proportional content of the cyano group-containing monomer unit in the particulate polymer is within the specific range set forth above, electrolyte solution affinity of a functional layer can be further improved, and adhesiveness of the functional layer can be increased. Moreover, when the proportional content of the cyano group-containing monomer unit in the particulate polymer is within the specific range set forth above, internal resistance of a secondary battery that includes a functional layer can be reduced.

In the presently disclosed binder for a secondary battery functional layer, proportional content of the carboxyl group-containing monomer unit in the particulate polymer is preferably not less than 0.1 mass% and not more than 10 mass%. When the proportional content of the carboxyl group-containing monomer unit in the particulate polymer is within the specific range set forth above, electrolyte solution affinity of a functional layer can be further improved, and adhesiveness of the functional layer can be increased.

In the presently disclosed binder for a secondary battery functional layer, it is preferable that the particulate polymer further includes a (meth)acrylic acid alkyl ester monomer unit, and proportional content of the (meth)acrylic acid alkyl ester monomer unit in the particulate polymer is not less than 40 mass% and not more than 92 mass%. When the proportional content of the (meth)acrylic acid alkyl ester monomer unit in the particulate polymer is within the specific range set forth above, heat shrinkage resistance and electrolyte solution affinity of a functional layer can be further improved, adhesiveness of the functional layer can be increased, and cycle characteristics of a secondary battery that includes the functional layer can be enhanced.

In the presently disclosed binder for a secondary battery functional layer, the particulate polymer preferably has a gel content of 85 mass% or more. When the gel content of the particulate polymer is not less than the specific value set forth above, cycle characteristics of a secondary battery that includes a functional layer can be enhanced.

Note that the "gel content of the particulate polymer" referred to in the present disclosure can be measured by a method described in the EXAMPLES section of the present specification.

In the presently disclosed binder for a secondary battery functional layer, the particulate polymer preferably has a volume-average particle diameter of not less than 0.05 μm and not more than 0.25 μm. When the volume-average particle diameter of the particulate polymer is within the specific range set forth above, adhesiveness and electrolyte solution affinity of a functional layer can be further improved.

The "volume-average particle diameter" referred to in the present disclosure represents a particle diameter at which, in a particle size distribution (by volume) measured by laser diffraction, cumulative volume calculated from a small diameter end of the distribution reaches 50%.

Moreover, the present disclosure aims to advantageously solve the problems set forth above, and a presently disclosed slurry composition for a secondary battery functional layer comprises any one of the binders set forth above. By using a slurry composition that contains any one of the binders set forth above, it is possible to form a functional layer having excellent heat shrinkage resistance and electrolyte solution affinity.

The presently disclosed slurry composition for a secondary battery functional layer can further comprise functional particles.

For example, in the presently disclosed slurry composition for a secondary battery functional layer, the functional particles may include non-conductive particles. The presently disclosed slurry composition for a secondary battery functional layer that contains non-conductive particles as functional particles can suitably be used in formation of a porous membrane layer.

In the presently disclosed slurry composition for a secondary battery functional layer, the non-conductive particles preferably have a volume-average particle diameter of 1.5 $\mu$m or less. When the volume-average particle diameter of the non-conductive particles is not more than the specific value set forth above, adhesiveness of a porous membrane layer formed as a functional layer can be increased.

Furthermore, the present disclosure aims to advantageously solve the problems set forth above, and a presently disclosed functional layer for a secondary battery is formed using the slurry composition for a secondary battery functional layer set forth above. A functional layer that is formed from the slurry composition set forth above has excellent heat shrinkage resistance and electrolyte solution affinity.

Also, the present disclosure aims to advantageously solve the problems set forth above, and a presently disclosed secondary battery comprises the functional layer for a secondary battery set forth above. A secondary battery that includes the functional layer set forth above has excellent electrolyte solution injectability.

Note that in the present specification, a functional layer that contains a binding material and non-conductive particles such as inorganic particles is referred to as a "porous membrane layer" or a "heat-resistant layer", whereas a functional layer that contains a binding material but does not contain non-conductive particles such as inorganic particles is referred to as an "adhesive layer". Also note that the "binding material" referred to above is preferably inclusive of the presently disclosed binder for a secondary battery functional layer, for example. In general, a porous membrane layer (heat-resistant layer) has a function of improving heat resistance and/or strength, whereas an adhesive layer has a function of improving adhesiveness. However, a porous membrane layer (heat-resistant layer) may have a function of improving adhesiveness in addition to a function of improving heat resistance and/or strength, and such a porous membrane layer (heat-resistant layer) is also referred to as a "heat-resistant adhesive layer".

(Advantageous Effect)

According to the present disclosure, it is possible to provide a binder for a secondary battery functional layer that can form a functional layer having excellent heat shrinkage resistance and electrolyte solution affinity.

Moreover, according to the present disclosure, it is possible to provide a slurry composition for a secondary battery functional layer that can form a functional layer having excellent heat shrinkage resistance and electrolyte solution affinity.

Furthermore, according to the present disclosure, it is possible to provide a functional layer for a secondary battery that has excellent heat shrinkage resistance and electrolyte solution affinity.

Also, according to the present disclosure, it is possible to provide a secondary battery that includes this functional layer.

DETAILED DESCRIPTION

The following provides a detailed description of embodiments of the present disclosure.

The presently disclosed binder for a secondary battery functional layer (hereinafter, also referred to simply as a "binder") is a binder for use in an application of producing any functional layer (for example, a porous membrane layer or an adhesive layer) that has a function such as reinforcement or adhesion inside of a secondary battery. For example, the presently disclosed binder for a secondary battery functional layer can be used in production of the presently disclosed slurry composition for a secondary battery functional layer (hereinafter, also referred to simply as a "slurry composition"). Moreover, the presently disclosed slurry composition for a secondary battery functional layer can be used in formation of the aforementioned functional layer. Furthermore, the presently disclosed functional layer for a secondary battery is formed from the presently disclosed slurry composition for a secondary battery functional layer. Also, the presently disclosed secondary battery includes the presently disclosed functional layer for a secondary battery. For example, the presently disclosed secondary battery may include a positive electrode, a negative electrode, and a separator as battery members, and at least one of these battery members may include the presently disclosed functional layer for a secondary battery. In other words, the presently disclosed secondary battery includes a battery member that includes the presently disclosed functional layer.

(Binder for secondary battery functional layer)

The presently disclosed binder contains a specific particulate polymer. Note that the presently disclosed binder is typically a composition having the aforementioned particulate polymer dispersed in a solvent. Moreover, the presently disclosed binder may further contain components other than the particulate polymer and solvent (hereinafter, referred to as "other components").

<Particulate polymer>

The particulate polymer is a component that functions as a binding material. The particulate polymer imparts adhesiveness to a functional layer formed using a slurry composition containing the binder, and holds components (for example, functional particles such as non-conductive particles) contained in the functional layer so that these components do not detach from the functional layer.

The particulate polymer includes a cyano group-containing monomer unit, a cyclic ether-containing monomer unit, and a carboxyl group-containing monomer unit. Moreover, the proportional content of the cyclic ether-containing monomer unit in the particulate polymer is not less than a specific value. Note that the particulate polymer may optionally further include monomer units other than the cyano group-containing monomer unit, the cyclic ether-containing monomer unit, and the carboxyl group-containing monomer unit (hereinafter, referred to as "other monomer units").

As a result of the presently disclosed binder containing a particulate polymer that has the chemical composition set forth above, a functional layer that is formed using the presently disclosed binder can display excellent heat shrinkage resistance and electrolyte solution affinity. Moreover, a functional layer that is formed using the presently disclosed binder also has excellent adhesiveness.

Although the reason that heat shrinkage resistance, electrolyte solution affinity, and adhesiveness of a functional layer can be improved through the presently disclosed binder in this manner is not certain, the reason for this is presumed to be as follows.

Firstly, electrolyte solution affinity and adhesiveness of a functional layer are presumed to be improved by the particulate polymer in the presently disclosed binder having excellent particle stability and high particle surface hydrophilicity as a result of including a carboxyl group-containing monomer unit.

Moreover, electrolyte solution affinity and adhesiveness of a functional layer are also thought to be improved as a result of the particulate polymer in the presently disclosed binder including a cyano group-containing monomer unit because this hydrophobizes the inside of particles, causes a carboxyl group of the aforementioned carboxyl group-containing monomer unit or the like to be relatively concentrated at the surfaces of the particles, and increases surface acid content.

Furthermore, the particulate polymer in the presently disclosed binder has a cyclic ether structure at the surfaces of particles as a result of the proportional content of cyclic ether-containing monomer units being not less than a specific value. The cyclic ether structure of the particulate polymer is presumed to interact with a surface of a separator substrate (for example, a surface hydrophilized through surface treatment) or with another component contained in a functional layer, such as a water-soluble polymer. This interaction is thought to stabilize a layer structure of the functional layer and thereby improve heat shrinkage resistance and electrolyte solution affinity of the functional layer. Moreover, this interaction is presumed to also improve adhesiveness of the functional layer.

<Cyano group-containing monomer unit>

Examples of cyano group-containing monomers that can form a cyano group-containing monomer unit include (meth)acrylonitriles such as acrylonitrile and methacrylonitrile; $\alpha$-halogenoacrylonitriles such as $\alpha$-chloroacrylonitrile and $\alpha$-bromoacrylonitrile; 2-cyanoethyl (meth)acrylates such as 2-cyanoethyl acrylate and 2-cyanoethyl methacrylate; and 2-cyanoethylacrylamide. From a viewpoint of further improving adhesiveness of a functional layer, it is preferable to use (meth)acrylonitrile, and more preferable to use acrylonitrile. Note that one of these cyano group-containing monomers may be used individually, or two or more of these cyano group-containing monomers may be used in combination in a freely selected ratio.

Also note that in the present disclosure, "(meth)acrylonitrile" is used to indicate "acrylonitrile" and/or "methacrylonitrile", whereas "(meth)acrylate" is used to indicate "acrylate" and/or "methacrylate".

The proportional content of cyano group monomer units when all repeating units (all monomer units) included in the particulate polymer are taken to be 100 mass% is preferably 2 mass% or more, more preferably 5 mass% or more, and even more preferably 10 mass% or more, and is preferably 30 mass% or less, more preferably 25 mass% or less, and even more preferably 20 mass% or less. When the proportional content of cyano group-containing monomer units in the particulate polymer is not less than any of the lower limits set forth above, electrolyte solution affinity and adhesiveness of a functional layer can be further improved. On the other hand, when the proportional content of cyano group-containing monomer units in the particulate polymer is not more than any of the upper limits set forth above, electrolyte solution affinity and adhesiveness of a functional layer can be further improved, and internal resistance of a secondary battery that includes the functional layer can be reduced.

<Cyclic ether-containing monomer unit>

No specific limitations are placed on cyclic ether-containing monomers that can form a cyclic ether-containing monomer unit so long as they are monomers that include a cyclic ether structure and examples thereof include a monomer (epoxy group-containing monomer unit) that includes an epoxy group (epoxy ring) and a monomer (oxetanyl group-containing monomer unit) that includes an oxetanyl group (oxetanyl ring). Of these cyclic ether-containing monomers, it is preferable to use an epoxy group-containing monomer from a viewpoint of further improving heat shrinkage resistance, electrolyte solution affinity, and adhesiveness of a functional layer.

Examples of epoxy group-containing monomers include allyl glycidyl ether, glycidyl (meth)acrylate, 3,4-epoxycyclohexylmethyl methacrylate, and 4-hydroxybutyl acrylate glycidyl ether.

The proportional content of cyclic ether-containing monomer units when all repeating units (all monomer units) included in the particulate polymer are taken to be 100 mass% is required to be 5 mass% or more, is preferably 10 mass% or more, and is preferably 40 mass% or less, and more preferably 30 mass% or less. When the proportional content of cyclic ether-containing monomer units in the particulate polymer is not less than any of the lower limits set forth above, it is possible to cause a functional layer formed using the binder to display excellent heat shrinkage resistance, electrolyte solution affinity, and adhesiveness. Moreover, when the proportional content of cyclic ether-containing monomer units in the particulate polymer is not less than any of the lower limits set forth above, cycle characteristics of a secondary battery that includes a functional layer can be improved due to gel content of the particulate polymer increasing. On the other hand, when the proportional content of cyclic ether-containing monomer units in the particulate polymer is not more than any of the upper limits set forth above, heat shrinkage resistance, electrolyte solution affinity, and adhesiveness of a functional layer can be further improved.

<Carboxyl group-containing monomer unit>

Examples of carboxyl-containing monomers that can form a carboxyl group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Moreover, an acid anhydride that produces a carboxyl group through hydrolysis can be used as a carboxyl group-containing monomer.

One of these carboxyl group-containing monomers may be used individually, or two or more of these carboxyl group-containing monomers may be used in combination. Of these carboxyl group-containing monomers, it is preferable to use acrylic acid, methacrylic acid, or itaconic acid from a viewpoint of further improving electrolyte solution affinity and adhesiveness of a functional layer, and more preferable to use acrylic acid or methacrylic acid.

The proportional content of carboxyl group-containing monomer units when all repeating units (all monomer units) included in the particulate polymer are taken to be 100 mass% is preferably 0.1 mass% or more, more preferably 1 mass% or more, and even more preferably 2 mass% or more, and is preferably 10 mass% or less, and more preferably 5 mass% or less. When the proportional content of carboxyl group-containing monomer units in the particulate polymer is not less than any of the lower limits set forth above, electrolyte solution affinity and adhesiveness of a functional layer can be further improved. On the other hand, when the proportional content of carboxyl group-containing monomer units in the particulate polymer is not more than any of the upper limits set forth above, adhesiveness of a functional layer can be further improved.

<Other monomer units>

The particulate polymer may include other monomer units in addition to a cyano group-containing monomer unit, a cyclic ether-containing monomer unit, and a carboxyl group-containing monomer unit such as described above. Although no specific limitations are placed on such monomer units, a (meth)acrylic acid alkyl ester monomer unit and a cross-linkable monomer unit are preferable examples thereof. When the particulate polymer further includes a (meth)acrylic acid alkyl ester monomer unit, adhesiveness of a functional layer can be further improved. Moreover, when the particulate polymer further includes a cross-linkable monomer unit, heat shrinkage resistance of a functional layer can be further improved.

Note that the (meth)acrylic acid alkyl ester monomer unit and the cross-linkable monomer unit are monomer units other than the cyano group-containing monomer unit, the cyclic ether-containing monomer unit, and the carboxyl group-containing monomer unit as previously described. Accordingly, (meth)acrylic acid alkyl ester monomers that can form a (meth)acrylic acid alkyl ester monomer unit and cross-linkable monomers that can form a cross-linkable monomer unit are not inclusive of the previously described cyano group-containing monomers, cyclic ether-containing monomers, and carboxyl group-containing monomers.

Note that in the present disclosure, "(meth)acryl" is used to indicate "acryl" and/or "methacryl".

«(Meth)acrylic acid alkyl ester monomer unit»

Examples of (meth)acrylic acid alkyl ester monomers that can form a (meth)acrylic acid alkyl ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate. One of these (meth)acrylic acid alkyl ester monomers may be used individually, or two or more of these (meth)acrylic acid alkyl ester monomers may be used in combination. Of these (meth)acrylic acid alkyl ester monomers, it is preferable to use 2-ethylhexyl acrylate or butyl acrylate from a viewpoint of even further improving adhesiveness of a functional layer and further improving heat shrinkage resistance, and more preferable to use butyl acrylate.

The proportional content of (meth)acrylic acid alkyl ester monomer units when all repeating units (all monomer units) included in the particulate polymer are taken to be 100 mass% is preferably 40 mass% or more, and more preferably 50 mass% or more, and is preferably 92 mass% or less, and more preferably 80 mass% or less. When the proportional content of (meth)acrylic acid alkyl ester monomer units in the particulate polymer is not less than any of the lower limits set forth above, adhesiveness of a functional layer can be even further improved. On the other hand, when the proportional content of (meth)acrylic acid alkyl ester monomer units in the particulate polymer is not more than any of the upper limits set forth above, heat shrinkage resistance of a functional layer can be further improved, and cycle characteristics of a secondary battery that includes the functional layer can be improved.

«Cross-linkable monomer unit»

A cross-linkable monomer that can form a cross-linkable monomer unit is a monomer that can form a cross-linked structure during or after polymerization through heating or energy ray irradiation.

Examples of cross-linkable monomers that can be used include polyfunctional monomers having at least two groups that display polymerization reactivity in the monomer. Examples of such polyfunctional monomers include divinyl monomers such as divinylbenzene, 1,3-butadiene, isoprene, and allyl methacrylate; di(meth)acrylic acid alkyl ester monomers such as ethylene dimethacrylate, diethylene glycol dimethacrylate, ethylene glycol dimethacrylate (EDMA), diethylene glycol diacrylate, and 1,3-butylene glycol diacrylate; tri(meth)acrylic acid alkyl ester monomers such as trimethylolpropane trimethacrylate and trimethylolpropane triacrylate; N-methylol group-containing monomers such as N-methylol(meth)acrylamide; and γ-methacryloxypropyltrimethoxysilane. One of these cross-linkable monomers may be used individually, or two or more of these cross-linkable monomers may be used in combination. Of these cross-linkable monomers, it is preferable to use divinylbenzene, allyl methacrylate, ethylene glycol dimethacrylate, or N-methylolacrylamide from a viewpoint of further improving heat shrinkage resistance of a functional layer, and more preferable to use allyl methacrylate or N-methylolacrylamide.

The proportional content of cross-linkable monomer units when all repeating units (all monomer units) included in the particulate polymer are taken to be 100 mass% is preferably 0.1 mass% or more, more preferably 0.2 mass% or more, and even more preferably 0.4 mass% or more, and is preferably 10 mass% or less, more preferably 5 mass% or less, and even more preferably 2 mass% or less. When the proportional content of cross-linkable monomer units in the particulate polymer is not less than any of the lower limits set forth above, heat shrinkage resistance of a functional layer can be even further improved. On the other hand, when the proportional content of cross-linkable monomer units in the particulate polymer is not more than any of the upper limits set forth above, adhesiveness of a functional layer can be further improved.

<Properties of particulate polymer>

Although no specific limitations are placed on the structure of the particulate polymer contained in the presently disclosed binder, and the particulate polymer may be a block copolymer, a graft copolymer, a random copolymer, or the like, it is preferable that the particulate polymer is a random copolymer.

Moreover, although the particulate polymer may have a core-shell structure including a core portion and a shell portion at least partially covering an outer surface of the core portion, it is preferable that the particulate polymer does not have a core-shell structure.

Accordingly, the particulate polymer is particularly preferably a random copolymer that does not have a core-shell structure.

<<Structure and glass-transition temperature of particulate polymer>>

When the particulate polymer is a random copolymer that does not have a core-shell structure, this enables homogenization of the particulate polymer, increased durability of the particulate polymer against electrolyte solution (electrolyte solution resistance), and increased dispersibility of the particulate polymer in a slurry composition. It is also possible to restrict the viscosity of a slurry composition, which facilitates removal of water from a functional layer when the slurry composition is dried to form a functional layer. Consequently, adhesiveness of a functional layer can be further improved.

In the present disclosure, a judgement as to whether or not the particulate polymer is a random copolymer that does not have a core-shell structure is made through glass-transition temperature measurement.

Specifically, in a case in which a particulate polymer that is a copolymer has one glass-transition temperature, this particulate polymer satisfies both (1) not having a core-shell structure and (2) being a random copolymer (i.e., corresponds to a random copolymer that does not have a core-shell structure). On the other hand, in a case in which a particulate polymer has two or more glass-transition temperatures, this particulate polymer does not satisfy at least one of (1) and (2) (i.e., does not correspond to a "random copolymer that does not have a core-shell structure").

The glass-transition temperature of the particulate polymer is preferably 20°C or lower, more preferably 10°C or lower, and even more preferably 0°C or lower. When the glass-transition temperature of the particulate polymer is not higher than any of the upper limits set forth above, adhesiveness of a functional layer can be further improved. Although no specific limitations are placed on the lower limit for the glass-transition temperature of the particulate polymer, the glass-transition temperature is normally -100°C or higher.

«Degree of swelling in electrolyte solution»

The "degree of swelling in electrolyte solution" of the particulate polymer referred to in the present disclosure can be determined as a value (factor) obtained by dividing post-immersion weight by pre-immersion weight in a situation in which a film (binder film) obtained through shaping of the particulate polymer is immersed in a prescribed non-aqueous electrolyte solution under specific conditions, and, more specifically, can be measured by shaping a binder film by a method described in the EXAMPLES section of the present specification and then performing measurement by a measurement method also described in the same EXAMPLES section.

The degree of swelling in electrolyte solution of the particulate polymer is preferably a factor of 2 or more, and more preferably a factor of 3 or more, and is preferably a factor of 8 or less, and more preferably a factor of 6 or less. When the degree of swelling in electrolyte solution of the particulate polymer is within any of the specific ranges set forth above, internal resistance of a secondary battery can be reduced.

The degree of swelling in electrolyte solution of the particulate polymer can be adjusted by altering the types and amounts of used monomers and the polymerization reaction conditions (for example, polymerization temperature, polymerization reaction time, etc.).

«Volume-average particle diameter»

The volume-average particle diameter of the particulate polymer is preferably 0.05 μm or more, more preferably 0.10 μm or more, and even more preferably 0.14 μm or more, and is preferably 0.25 μm or less, and more preferably 0.20 μm or less. When the volume-average particle diameter of the particulate polymer is not less than any of the lower limits set forth above, electrolyte solution affinity of a functional layer can be further improved due to air permeability of the functional layer increasing. On the other hand, when the volume-average particle diameter of the particulate polymer is not more than any of the upper limits set forth above, adhesiveness and electrolyte solution affinity of a functional layer can be further improved.

«Gel content»

The gel content of the particulate polymer is preferably 85 mass% or more, and more preferably 90 mass% or more. When the gel content of the particulate polymer is not less than any of the lower limits set forth above, elution of components into electrolyte solution can be reduced, and cycle characteristics of a secondary battery that includes a functional layer can be improved. Note that although no specific limitations are placed on the upper limit for the gel content of the particulate polymer, the gel content is normally 99 mass% or less.
Also note that the gel content can be adjusted by altering the polymerization temperature, the type and amount of an additive such as a molecular weight modifier, the conversion rate (monomer consumption) at the end of reaction, and so forth. For example, the gel content can be increased by reducing the amount of molecular weight modifier that is used in polymerization and can be reduced by increasing the amount of molecular weight modifier that is used in polymerization

<Production of particulate polymer>

The particulate polymer is produced through polymerization of a monomer composition that contains the monomers described above.
The proportional content of each monomer in the monomer composition is normally set as the same as the proportional content of the monomer unit in the desired particulate polymer.
No specific limitations are placed on the method of polymerization of the particulate polymer, and any of solution polymerization, suspension polymerization, bulk polymerization, and emulsion polymerization may be used, for example. The polymerization reaction may be, for example, addition polymerization such as ionic polymerization, radical polymerization, or living radical polymerization. Commonly used emulsifiers, dispersants, polymerization initiators, polymerization aids, and the like may be used in the polymerization in an amount that is also the same as commonly used.
In a case in which a particulate polymer formed of a random copolymer that does not have a core-shell structure is to be produced, formation of a block copolymer or a graft copolymer may be inhibited by initiating polymerization in a state in which monomers in the monomer composition are in a monomer state rather than in an oligomer state that has undergone a certain degree of polymerization.

<Solvent>

Known solvents that enable dispersion of the particulate polymer described above can be used as the solvent that can be contained in the presently disclosed binder. Of such solvents, water is preferably used as the solvent. Note that at least a portion of the solvent that can be contained in the binder may be a polymerization solvent that was used in production of the particulate polymer, but is not specifically limited thereto.

<Production of binder for non-aqueous secondary battery functional layer>

No specific limitations are placed on the method by which the presently disclosed binder is produced. For example, in a case in which the particulate polymer is produced in a solvent such as water and is obtained as a dispersion liquid, the dispersion liquid of the particulate polymer may be used as the binder in that form, or other components may optionally be added to the dispersion liquid of the particulate polymer to produce the binder. Examples of these other components include other components subsequently described in the "Slurry composition for secondary battery functional layer" section.

(Slurry composition for secondary battery functional layer)

The presently disclosed slurry composition is a composition that is used in an application of functional layer formation, that contains the binder set forth above, and that optionally contains functional particles and other components. In other words, the presently disclosed slurry composition normally contains a particulate polymer and a solvent, and optionally further contains functional particles and other components. As a result of the presently disclosed slurry composition containing the binder set forth above, it is possible to obtain a functional layer having excellent heat shrinkage resistance and electrolyte solution affinity by drying the presently disclosed slurry composition on a substrate, for example. Moreover, this functional layer also has excellent adhesiveness.

Also note that a secondary battery including this functional layer has excellent electrolyte solution injectability because the functional layer has excellent electrolyte solution affinity as previously described. In particular, it is possible to ensure that a secondary battery including the functional layer has sufficiently high electrolyte solution injectability even in a situation in which the secondary battery is densified with the aim of increasing secondary battery capacity, for example.

<Binder>

The presently disclosed binder set forth above that contains at least a particulate polymer is used as a binder.

No specific limitations are placed on the amount of the binder in the slurry composition. For example, in a case in which the slurry composition contains functional particles such as subsequently described non-conductive particles, the amount of the binder in the slurry composition, in terms of solid content relative to 100 parts by mass of the functional particles, is preferably 0.5 parts by mass or more, and more preferably 1.0 parts by mass or more, and is preferably 6.0 parts by mass or less, and more preferably 3.0 parts by mass or less. When the amount of the binder in the slurry composition is not less than any of the lower limits set forth above, adhesiveness of a functional layer can be further improved. On the other hand, when the amount of the binder in the slurry composition is not more than any of the upper limits set forth above, electrolyte solution affinity of a functional layer can be further improved due to air permeability of the functional layer increasing.

<Functional particles>

In the case of a functional layer that is a porous membrane layer, for example, non-conductive particles can be used as functional particles for causing the functional layer to display an expected function.

In particular, since a functional layer that is formed using the presently disclosed slurry composition has excellent heat shrinkage resistance, a presently disclosed slurry composition that contains non-conductive particles as functional particles can suitably be used in an application of forming a porous membrane layer that improves heat resistance and/or strength of a battery member.

<<Non-conductive particles>>

More specifically, although both inorganic fine particles and organic fine particles can be used without any specific limitations as non-conductive particles that can be used in a porous membrane layer of a secondary battery, inorganic fine particles are normally used. In particular, it is preferable that the material of the non-conductive particles is an electrochemically stable material that is stably present in the environment of use of a secondary battery. Examples of materials of the non-conductive particles that are preferable from the viewpoints set forth above include particles of oxides such as aluminum oxide (alumina), hydrous aluminum oxide (boehmite), silicon oxide, magnesium oxide (magnesia), calcium oxide, titanium oxide (titania), $BaTiO_3$, $ZrO$, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, and/or the like as necessary.

Moreover, alumina, boehmite, or barium sulfate is preferably used as the material of the non-conductive particles from a viewpoint of inhibiting aggregation and increasing dispersibility of the slurry composition for a functional layer.

One of these types of non-conductive particles may be used individually, or two or more of these types of non-conductive particles may be used in combination.

The volume-average particle diameter of the non-conductive particles is preferably 0.1 $\mu$m or more, more preferably 0.3 $\mu$m or more, and even more preferably 0.6 $\mu$m or more, and is preferably 1.5 $\mu$m or less, and more preferably 1.0 $\mu$m or less. When the volume-average particle diameter of the non-conductive particles is not less than any of the lower limits set forth above, electrolyte solution affinity of a functional layer can be further improved due to air permeability of the functional layer increasing. On the other hand, when the volume-average particle diameter of the non-conductive particles is not more than any of the upper limits set forth above, adhesiveness of a functional layer can be further improved.

<Other components>

The slurry composition may further contain other components besides the components described above. No specific limitations are placed on these other components so long as they do not have an excessively negative influence on battery reactions in a secondary battery that includes a functional layer. Moreover, one type of other component may be used, or two or more types of other components may be used.

Examples of other components include surfactants, wetting agents, leveling agents, dispersants, electrolyte solution decomposition inhibitors, water-soluble polymers, and so forth.

From a viewpoint of further improving heat shrinkage resistance of a functional layer, it is preferable to use a water-soluble polymer as another component.

Note that when a polymer is said to "be water-soluble" in the present disclosure, this means that when 0.5 g of the polymer is dissolved in 100 g of water at a temperature of 25°C, insoluble content is less than 1 mass%.

Although no specific limitations are placed on the water-soluble polymer, carboxymethyl cellulose and polyacrylamide are preferable from a viewpoint of even further improving heat shrinkage resistance of a functional layer, and carboxymethyl cellulose is more preferable.

The amount of the water-soluble polymer in the slurry composition is not specifically limited. For example, in a case in which the slurry composition contains functional particles such as subsequently described non-conductive particles, the amount of the water-soluble polymer in the slurry composition, in terms of solid content relative to 100 parts by mass of the functional particles, is preferably 0.2 parts by mass or more, and more preferably 0.4 parts by mass or more, and is preferably 3 parts by mass or less, more preferably 2 parts by mass or less, and even more preferably 1.5 parts by mass or less. When the amount of the water-soluble polymer in the slurry composition is not less than any of the lower limits set forth above, heat shrinkage resistance of a functional layer can be even further improved. On the other hand, when the amount of the water-soluble polymer in the slurry composition is not more than any of the upper limits set forth above, it is possible to ensure sufficiently high coating stability when the slurry composition is applied onto a substrate to form a functional layer.

Moreover, from a viewpoint of improving stability of the slurry composition, it is preferable to use a dispersant as another component. The dispersant may be sodium polyacrylate or the like, for example, but is not specifically limited thereto. Note that the dispersant is a different component to the water-soluble polymer described above.

The amount of the dispersant in the slurry composition is not specifically limited. For example, in a case in which the slurry composition contains functional particles such as subsequently described non-conductive particles, the amount of the dispersant in the slurry composition, in terms of solid content relative to 100 parts by mass of the functional particles, is preferably 0.1 parts by mass or more, more preferably 0.2 parts by mass or more, and even more preferably 0.5 parts by mass or more, and is preferably 2 parts by mass or less, and more preferably 1 part by mass or less. When the amount of the dispersant in the slurry composition is not less than any of the lower limits set forth above, stability of the slurry composition can be further improved. On the other hand, when the amount of the dispersant in the slurry composition is not more than any of the upper limits set forth above, the water content of a functional layer formed through application of the slurry composition onto a substrate can be restricted to a low level.

Furthermore, from a viewpoint of improving coatability of the slurry composition, it is preferable to use a surfactant as another component. The surfactant may be a polyethylene glycol-type surfactant, for example, but is not specifically limited thereto. Note that the surfactant is a different component to the water-soluble polymer and dispersant described above.

The amount of the surfactant in the slurry composition is not specifically limited. For example, in a case in which the slurry composition contains functional particles such as subsequently described non-conductive particles, the amount of the surfactant in the slurry composition, in terms of solid content relative to 100 parts by mass of the functional particles, is preferably 0.05 parts by mass or more, and more preferably 0.1 parts by mass or more, and is preferably 0.5 parts by mass or less, and more preferably 0.3 parts by mass or less. When the amount of the surfactant in the slurry composition is not less than any of the lower limits set forth above, sufficient coatability of the slurry composition onto a substrate can be ensured. On the other hand, when the amount of the surfactant in the slurry composition is not more than any of the upper limits set forth above, sufficiently high adhesiveness of a functional layer can be ensured. Although no specific limitations are placed on the lower limit for the amount of the surfactant in the slurry composition, the amount of the surfactant is normally 0.1 parts by mass or more.

<Production of slurry composition>

No specific limitations are placed on the method by which the slurry composition is produced.

For example, in a case in which the slurry composition is a slurry composition for a porous membrane layer, the slurry composition can be produced by mixing the binder, non-conductive particles, and other components that are used as necessary in the presence of a solvent.

Moreover, in a case in which the slurry composition is a slurry composition for an adhesive layer, a binder that is a dispersion liquid of the particulate polymer may be used as the slurry composition in that form or after dilution with a solvent, or the slurry composition may be produced by mixing the binder and other components that are used as necessary in the presence of a solvent, for example.

Note that the solvent used in production of the slurry composition can be the solvent (for example, water, etc.) that was previously described in the "Binder for secondary battery functional layer" section. Moreover, the solvent used in production of the slurry composition may include a solvent that was contained in the binder. The mixing method is not specifically limited and may be mixing using a typically used stirrer or disperser.

(Functional layer for secondary battery)

The presently disclosed functional layer is a layer having a function such as reinforcement or adhesion inside a secondary battery. For example, the functional layer may be a porous membrane layer that improves heat resistance and/or strength or an adhesive layer that improves adhesiveness. Moreover, the presently disclosed functional layer is a layer that is formed from the presently disclosed slurry composition set forth above. For example, the presently disclosed functional layer can be formed by applying the slurry composition set forth above onto the surface of an appropriate substrate to form a coating film, and subsequently drying the coating film that is formed. In other words, the presently disclosed functional layer is formed of a dried product of the slurry composition set forth above, normally contains at least a particulate polymer, and optionally further contains functional particles and other components. Note that components contained in the functional layer are components that were contained in the slurry composition set forth above, and thus the preferred ratio of these components is the same as the preferred ratio of the components in the slurry composition.

The presently disclosed functional layer has excellent heat shrinkage resistance and electrolyte solution affinity as a result of being formed from the presently disclosed slurry composition containing the presently disclosed binder. The presently disclosed functional layer also has excellent adhesiveness.

Also note that a secondary battery including the presently disclosed functional layer has excellent electrolyte solution injectability because the presently disclosed functional layer has excellent electrolyte solution affinity as previously described. In particular, it is possible to ensure that a secondary battery including the functional layer has sufficiently high electrolyte solution injectability even in a situation in which the secondary battery is densified with the aim of increasing secondary battery capacity, for example.

<Substrate>

No limitations are placed on the substrate onto which the slurry composition is applied. For example, a coating film of the slurry composition may be formed on a surface of a releasable substrate, this coating film may be dried to form a functional layer, and then the releasable substrate may be peeled from the functional layer. The functional layer that is peeled from the releasable substrate in this manner can be used as a free-standing film in formation of a battery member of a secondary battery.

However, it is preferable that a separator substrate or an electrode substrate is used as the substrate from a viewpoint of increasing battery member production efficiency through omission of a step of peeling the functional layer. More specifically, the slurry composition is preferably applied onto a separator substrate or an electrode substrate in a situation in which a porous membrane layer or an adhesive layer is to be produced.

Moreover, from a viewpoint of increasing adhesiveness between the functional layer that is formed and a substrate such as a separator substrate or an electrode substrate, the surface of the substrate may be subjected to surface treatment such as corona treatment or plasma treatment so as to hydrophilize the surface.

<<Current collector>>

<<Separator substrate>>

The separator substrate is not specifically limited and may be a known separator substrate such as an organic separator substrate. The organic separator substrate is a porous member that is made from an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made from polyethylene due to the excellent strength thereof.

«Electrode substrate»

The electrode substrate (positive electrode substrate or negative electrode substrate) is not specifically limited and may be an electrode substrate obtained by forming an electrode mixed material layer containing electrode active material particles and a binding material on a current collector.

The current collector is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

The electrode active material particles that are contained in the electrode mixed material layer of the electrode substrate are not specifically limited, and known electrode active material particles can be used. Moreover, the binding material that is contained in the electrode mixed material layer of the electrode substrate can be any binding material that is for use in an electrode mixed material layer.

<Formation method of functional layer>

Examples of methods by which the functional layer may be formed on a substrate such as the separator substrate or the electrode substrate described above include:

(1) a method in which the presently disclosed slurry composition is applied onto the surface of a substrate (surface at the electrode mixed material layer-side in the case of the electrode substrate; same applies below) and is then dried;
(2) a method in which a substrate is immersed in the presently disclosed slurry composition and is then dried; and
(3) a method in which the presently disclosed slurry composition is applied onto a releasable substrate and is dried to produce a functional layer that is then transferred onto the surface of a substrate.

Of these methods, method (1) is particularly preferable since it allows simple control of the thickness of the functional layer. In more detail, method (1) includes a step of applying the slurry composition onto a substrate (application step) and a step of drying the slurry composition that has been applied onto the substrate to form a functional layer (drying step).

«Application step»

Examples of methods by which the slurry composition may be applied onto the substrate in the application step include, but are not specifically limited to, doctor blading, reverse roll coating, direct roll coating, gravure coating, extrusion coating, and brush coating.

<<Drying step>>

The method by which the slurry composition on the substrate is dried in the drying step may be any commonly known method without any specific limitations. Examples of drying methods that may be used include drying by warm, hot, or low-humidity air, drying in a vacuum, and drying through irradiation with infrared light, electron beams, or the like. Although no specific limitations are placed on the drying conditions, the drying temperature is preferably 40°C to 150°C, and the drying time is preferably 2 minutes to 30 minutes.

The thickness of the formed functional layer is preferably 0.5 $\mu$m or more, and more preferably 1 $\mu$m or more, and is preferably 4 $\mu$m or less, and more preferably 3 $\mu$m or less. When the thickness of the functional layer is not less than any of the lower limits set forth above, sufficiently high heat shrinkage resistance of the functional layer can be ensured. On the other hand, when the thickness of the functional layer is not more than any of the upper limits set forth above, this makes it easier to increase the capacity of a secondary battery through thickness reduction of the functional layer.

(Battery member including functional layer)

A battery member (separator or electrode) that includes the presently disclosed functional layer may include constituent elements other than the presently disclosed functional layer set forth above and a substrate so long as the effects according to the present disclosure are not significantly lost. Examples of such constituent elements include, but are not specifically limited to, a porous membrane layer, an adhesive layer, and the like that do not correspond to the presently disclosed functional layer.

Moreover, the battery member may include a plurality of types of the presently disclosed functional layer. For example, a separator may include a porous membrane layer that is formed from a presently disclosed slurry composition for a porous membrane layer on a separator substrate and may also include an adhesive layer that is formed from a presently disclosed slurry composition for an adhesive layer on the porous membrane layer.

The battery member that includes the presently disclosed functional layer has excellent heat shrinkage resistance and electrolyte solution affinity and can adhere well to an adjacent battery member.

(Secondary battery)

The presently disclosed secondary battery includes the presently disclosed functional layer set forth above. More specifically, the presently disclosed secondary battery includes a positive electrode, a negative electrode, a separator, and an electrolyte solution, wherein at least one battery member among the positive electrode, the negative electrode, and the separator includes the functional layer for a secondary battery set forth above.

Note that the presently disclosed secondary battery has excellent electrolyte solution injectability as a result of including the presently disclosed functional layer having high electrolyte solution affinity. In particular, the presently disclosed secondary battery can ensure sufficiently high electrolyte solution injectability even in a situation in which densification of the secondary battery is performed with the aim of increasing capacity or the like.

Moreover, as a result of the presently disclosed secondary battery including the presently disclosed functional layer having high adhesiveness, the presently disclosed secondary battery has excellent battery characteristics such as cycle characteristics due to having good adhesion between battery members.

<Positive electrode, negative electrode, and separator>

At least one of the positive electrode, the negative electrode, and the separator used in the presently disclosed secondary battery is a battery member that includes the presently disclosed functional layer set forth above. Note that a known positive electrode, negative electrode, or separator can be used without any specific limitations as a positive electrode, negative electrode, or separator that does not include the presently disclosed functional layer.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of secondary battery>

The presently disclosed secondary battery set forth above can be produced by, for example, stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one member among the positive electrode, the negative electrode, and the separator is a battery member that includes the presently disclosed functional layer. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

In the examples and comparative examples, the following methods were used to measure and evaluate the volume-average particle diameter, glass-transition temperature, gel content, and degree of swelling in electrolyte solution of a particulate polymer, the adhesiveness, electrolyte solution affinity, and heat shrinkage resistance of a functional layer, and the cycle characteristics of a secondary battery.

<Volume-average particle diameter of particulate polymer>

The volume-average particle diameter of a particulate polymer was measured by laser diffraction. Specifically, a produced water dispersion containing the particulate polymer (adjusted to a solid content concentration of 0.1 mass%) was used as a sample. In a particle diameter distribution (by volume) measured using a laser diffraction particle size analyzer (produced by Beckman Coulter, Inc.; product name: LS-13 320), the particle diameter D50 at which cumulative volume calculated from the small diameter end of the distribution reached 50% was taken to be the volume-average particle diameter.

<Glass-transition temperature of particulate polymer>

A produced water dispersion containing a particulate polymer was predried for 3 days in an environment having a relative humidity of 50% and a temperature of 23°C to 26°C and was then pre-formed into a film of $2 \pm 0.5$ mm in thickness. The pre-formed film was dried by a vacuum dryer at a temperature of 120°C for 10 hours. Thereafter, the dried film was taken to be a sample and was used in measurement of glass-transition temperature (°C) in accordance with JIS K7121 under conditions of a measurement temperature of -100°C to 180°C and a heating rate of 5°C/min using a differential scanning calorimeter (DSC7200 produced by Seiko Instruments Inc.).

<Gel content of particulate polymer>

A produced water dispersion containing a particulate polymer was dried in an environment having a humidity of 50% and a temperature of 23°C to 25°C to form a film of $1 \pm 0.3$ mm in thickness. The resultant film was dried by a vacuum dryer at a temperature of 60°C for 10 hours. Thereafter, the dried film was cut to approximately 3 mm to 5 mm-square, and approximately 1 g thereof was precisely weighed. The mass of the film piece obtained by this cutting was taken to be w0. The film piece was immersed in 50 g of tetrahydrofuran (THF) for 24 hours. Thereafter, the film piece was pulled out of the THF, was vacuum dried at a temperature of 105°C for 3 hours, and the mass w1 of insoluble content was measured. The gel content was calculated according to the following calculation formula.

$$\text{Gel content (mass\%)} = (\text{w1/w0}) \times 100$$

<Degree of swelling in electrolyte solution of particulate polymer>

A produced water dispersion containing a particulate polymer was dried in an environment having a relative humidity of 50% and a temperature of 23°C to 25°C to form a film of approximately 0.1 mm in thickness. The formed film was cut out as approximately 2 cm-square, and the weight thereof (pre-immersion weight) was measured. Thereafter, the film was immersed in electrolyte solution at a temperature of 60°C for 72 hours. The immersed film was then pulled out of the electrolyte solution, electrolyte solution on the film was wiped off, and then the weight of the film (post-immersion weight) was promptly measured. A value of (post-immersion weight)/(pre-immersion weight) [factor] was taken to be the degree of swelling in electrolyte solution. Note that the electrolyte solution was a solution obtained by dissolving LiPF$_6$ with a concentration of 1 mol/L in a mixed solvent of ethylene carbonate and ethyl methyl carbonate in a mass ratio of 3:7. Also note that a smaller degree of swelling in electrolyte solution for the particulate polymer indicates that the particulate polymer has higher electrolyte solution resistance.

<Adhesiveness of functional layer>

A functional layer-equipped separator produced in each example or comparative example was cut out as 10 mm in width and 50 mm in length to obtain a test specimen.

Next, a stainless steel plate having double-sided tape (No. 5608 produced by Nitto Denko Corporation) affixed thereto was prepared, and the surface of the functional layer of the test specimen was affixed to the double-sided tape. One end of the separator substrate was pulled and peeled off at a speed of 50 mm/min such that the peeling surface was at 180°, and the strength during this peeling was measured. Adhesiveness of the functional layer was evaluated by the following standard.

A: Peel strength of 10 N/m or more
B: Peel strength of not less than 5 N/m and less than 10 N/m
C: Peel strength of less than 5 N/m

<Electrolyte solution affinity of functional layer>

A produced water dispersion containing a particulate polymer was applied onto aluminum foil of 20 $\mu$m in thickness using a doctor blade film applicator, and was dried at a temperature of 50°C for 15 minutes to form a film of a functional layer of 20 $\pm$ 2 $\mu$m in thickness on the aluminum foil. The functional layer-equipped aluminum foil was dried by a vacuum dryer at a temperature of 60°C for 10 hours. Thereafter, the functional layer-equipped aluminum foil was cut to 100 mm-square, the electrolyte solution contact angle was measured at 10 points using a portable contact angle meter (PCA-11 produced by Kyowa Interface Science Co., Ltd.), an average value of the measurements was calculated, and electrolyte solution affinity of the functional layer was evaluated in accordance with the following standard. A lower value for the electrolyte solution contact angle indicates that the functional layer has higher wettability with electrolyte solution and higher electrolyte solution affinity.

A: Average value for electrolyte solution contact angle of less than 40°
B: Average value for electrolyte solution contact angle of not less than 40° and less than 50°
C: Average value for electrolyte solution contact angle of 50° or more

<Heat shrinkage resistance of functional layer>

A functional layer-equipped separator produced in each example or comparative example was cut out as a square of 12 cm in width by 12 cm in length, and then a square having a side length of 10 cm was drawn in an inner part of the cut-out square to obtain a test specimen. This test specimen was placed in a 150°C constant-temperature tank and was left therein for 1 hour in order to heat the test specimen. Thereafter, the area change of the square drawn in the inner part of the test specimen was calculated (area change = {(preheating square area - post-heating square area)/pre-heating square area} $\times$ 100%) as the rate of heat shrinkage, and heat shrinkage resistance of the functional layer was evaluated in accordance with the following standard. A smaller heat shrinkage rate indicates that the functional layer has better heat shrinkage resistance.

A: Heat shrinkage rate of less than 10%
B: Heat shrinkage rate of not less than 10% and less than 20%
C: Heat shrinkage rate of not less than 20% and less than 30%
D: Heat shrinkage rate of 30% or more

<Cycle characteristics of secondary battery>

A produced lithium ion secondary battery was left at rest in a 25°C environment for 24 hours. Thereafter, the lithium ion secondary battery was subjected to a charge/discharge operation of charging to 4.2 V by a constant-current constant-voltage (CC-CV) method with a charge rate of 1C (cut-off condition: 0.02C) and discharging to 3.0 V by a constant-current (CC) method with a discharge rate of 1C at 25°C, and the initial capacity C0 was measured.

The lithium ion secondary battery was also repeatedly subjected to the same charge/discharge operation in a 25°C environment, and the capacity C1 after 300 cycles was measured. The capacity maintenance rate ΔC was calculated (ΔC = (C1/C0) × 100(%)) and was evaluated by the following standard. A higher value for the capacity maintenance rate indicates less reduction of discharge capacity and better cycle characteristics.

A: Capacity maintenance rate ΔC of 85% or more
B: Capacity maintenance rate ΔC of not less than 75% and less than 85%
C: Capacity maintenance rate ΔC of less than 75%

(Example 1)

<Production of water dispersion containing particulate polymer>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas and the temperature was raised to 70°C.

Meanwhile, a monomer composition was obtained in a separate vessel by mixing 50 parts of deionized water, 0.1 parts of sodium dodecylbenzenesulfonate (NEOPELEX G-15 produced by Kao Corporation) as an emulsifier, 76.6 parts of butyl acrylate (BA) as a (meth)acrylic acid alkyl ester monomer, 10 parts of acrylonitrile (AN) as a cyano group-containing monomer, 10 parts of allyl glycidyl ether (AGE) as a cyclic ether-containing monomer, 3 parts of acrylic acid (AA) as a carboxyl group-containing monomer, and 0.4 parts of allyl methacrylate (AMA) as a cross-linkable monomer. The monomer composition was continuously added into the reactor over 4 hours to perform polymerization. The reaction was carried out at 70°C during the addition. After completion of addition, the temperature was raised to 80°C, and a further 3 hours of stirring was performed to complete the reaction and yield a water dispersion (binder) containing a particulate polymer. The obtained water dispersion (binder) containing the particulate polymer was used to measure and evaluate the volume-average particle diameter, glass-transition temperature, gel content, and degree of swelling in electrolyte solution of the particulate polymer and the electrolyte solution affinity of a functional layer. The results are shown in Table 1.

Note that the obtained particulate polymer was confirmed to be a random copolymer not having a core-shell structure based on the particulate polymer having one glass-transition temperature.

<Production of slurry composition for functional layer>

Alumina particles (AKP-3000 produced by Sumitomo Chemical Co., Ltd.; volume-average particle diameter D50: 0.7 μm) were prepared as non-conductive particles, sodium polyacrylate (Aron T-50 produced by Toagosei Co., Ltd.) was prepared as a dispersant, and carboxymethyl cellulose (produced by Daicel FineChem Ltd.; product name: 1220) having a degree of etherification of 0.8 to 1.0 was prepared as a water-soluble polymer. Note that the viscosity of a 1% aqueous solution of the carboxymethyl cellulose was 10 mPa·s to 20 mPa·s.

Deionized water, 100 parts of the non-conductive particles, and 0.5 parts of the dispersant were mixed and were treated by a bead mill (LMZ015 produced by Ashizawa Finetech Ltd.) for 1 hour to obtain a dispersion liquid. In addition, 3 parts (in terms of solid content) of the water dispersion containing the particulate polymer as a binder, 1.5 parts (in terms of solid content) of the 1% aqueous solution of carboxymethyl cellulose (CMC) as a water-soluble polymer, and 0.3 parts of a polyethylene glycol-type surfactant (NOPTECHS ED-052 produced by San Nopco Limited) were mixed so as to produce a slurry composition for a functional layer having a solid content concentration of 40 mass%.

<Production of separator having functional layer at one side (functional layer-equipped separator)>

A separator substrate (produced by Asahi Kasei Corporation; product name: ND412; thickness: 12 μm) made of polyethylene was prepared. The slurry composition for a functional layer produced as described above was applied onto the surface of the prepared separator substrate and was dried at a temperature of 50°C for 3 minutes to obtain a separator including a functional layer (porous membrane) at one side (functional layer-equipped separator; functional layer thickness: 3 μm). The obtained functional layer-equipped separator was used to evaluate adhesiveness of the functional layer. The result is shown in Table 1.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as a carboxyl group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, the polymerization reaction was quenched by cooling to yield a mixture containing a particulate binder (styrene-butadiene copolymer) as a binding material for a negative electrode. The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the binding material for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binding material for a negative electrode was added and was kneaded therewith at a rotation speed of 40 rpm for 40 minutes. The viscosity was then adjusted to 3,000 $\pm$ 500 mPa·s (measured by B-type viscometer at 25°C and 60 rpm) through addition of deionized water to thereby produce a slurry composition for a negative electrode mixed material layer.

The slurry composition for a negative electrode mixed material layer was applied onto the surface of copper foil of 15 $\mu$m in thickness serving as a current collector by a comma coater such as to have a coating weight of 11 $\pm$ 0.5 mg/cm$^2$. The copper foil with the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

Thereafter, the negative electrode mixed material layer-side of the produced negative electrode web was roll pressed with a line pressure of 11 t (tons) in an environment having a temperature of 25 $\pm$ 3°C to obtain a negative electrode having a negative electrode mixed material layer density of 1.60 g/cm$^3$. This negative electrode was subsequently left for one week in an environment having a temperature of 25 $\pm$ 3°C and a relative humidity of 50 $\pm$ 5%.

<Production of positive electrode>

A slurry composition for a positive electrode mixed material layer was produced by adding 96 parts of an active material NMC111 (LiNi$_{1/3}$Co$_{1/3}$Mn$_{1/3}$O$_2$) based on a lithium complex oxide of Co-Ni-Mn as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binding material into a planetary mixer, further adding N-methyl-2-pyrrolidone (NMP) as a dispersion medium to adjust the total solid content concentration to 67%, and mixing these materials.

The obtained slurry composition for a positive electrode mixed material layer was then applied onto aluminum foil of 20 $\mu$m in thickness serving as a current collector by a comma coater such as to have a coating weight of 20 $\pm$ 0.5 mg/cm$^2$.

The aluminum foil was conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.

Thereafter, the positive electrode mixed material layer-side of the produced positive electrode web was roll pressed with a line pressure of 14 t (tons) in an environment having a temperature of 25 $\pm$ 3°C to obtain a positive electrode having a positive electrode mixed material layer density of 3.40 g/cm$^3$. This positive electrode was subsequently left for one week in an environment having a temperature of 25 $\pm$ 3°C and a relative humidity of 50 $\pm$ 5%.

<Production of secondary battery>

The post-pressing positive electrode obtained as described above was cut out as a 4 cm $\times$ 4 cm square, and the post-pressing negative electrode was cut out as 4.2 cm $\times$ 4.2 cm. Moreover, the functional layer-equipped separator obtained as described above was cut out as 5 cm $\times$ 5 cm. Next, the surface at the functional layer-side of the cut-out functional layer-equipped separator was oriented toward and arranged on the positive electrode mixed material layer of the cut-out post-pressing positive electrode. In addition, the surface at the negative electrode mixed material layer-side of the cut-out post-pressing negative electrode was oriented toward and arranged on a surface of the arranged functional layer-equipped separator that was not in contact with the positive electrode, thereby obtaining a battery member laminate (positive electrode/separator/negative electrode). Next, the obtained laminate was enclosed in an aluminum packing case serving as a battery case, and electrolyte solution (solvent: ethylene carbonate (EC)/diethyl carbonate (DEC)/vinylene carbonate (VC) (volume ratio = 68.5/30/1.5); electrolyte: LiPF$_6$ of 1 mol/L in concentration) was injected such that no air remained. An opening of the aluminum packing case was heat sealed at a temperature of 150°C to tightly close the aluminum packing case and thereby produce a 40-mAh stacked lithium ion secondary battery. This lithium ion secondary battery was used to evaluate cycle characteristics. The result is shown in Table 1.

(Examples 2 to 10, 13 to 16, and 20, and Comparative Examples 1 to 5)

A water dispersion containing a particulate polymer, a slurry composition for a functional layer, a functional layer-equipped separator, a negative electrode, a positive electrode, and a secondary battery were produced and various measurements and evaluations were performed in the same way as in Example 1 with the exception that in production of the water dispersion containing a particulate polymer in Example 1, the types and amounts of used monomers were changed such that the proportional content of each monomer unit in the obtained particulate polymer was as indicated in Table 1 or 2. The results are shown in Tables 1 and 2.

(Example 11)

A water dispersion containing a particulate polymer, a slurry composition for a functional layer, a functional layer-equipped separator, a negative electrode, a positive electrode, and a secondary battery were produced and various measurements and evaluations were performed in the same way as in Example 1 with the exception that in production of the water dispersion containing a particulate polymer in Example 1, the amount of butyl acrylate (BA) used as a (meth)acrylic acid alkyl ester monomer was changed from 76.6 parts to 77.6 parts, 2 parts of methacrylic acid (MAA) was used instead of 3 parts of acrylic acid (AA) as a carboxyl group-containing monomer, and the amount of emulsifier (sodium dodecylbenzenesulfonate) used in the reactor was changed from 0.05 parts to 0.02 parts. The results are shown in Table 1.

(Example 12)

A water dispersion containing a particulate polymer, a slurry composition for a functional layer, a functional layer-equipped separator, a negative electrode, a positive electrode, and a secondary battery were produced and various measurements and evaluations were performed in the same way as in Example 1 with the exception that in production of the water dispersion containing a particulate polymer in Example 1, the amount of butyl acrylate (BA) used as a (meth)acrylic acid alkyl ester monomer was changed from 76.6 parts to 77.6 parts, 2 parts of methacrylic acid (MAA) was used instead of 3 parts of acrylic acid (AA) as a carboxyl group-containing monomer, and the amount of emulsifier (sodium dodecylbenzenesulfonate) used in the reactor was changed from 0.05 parts to 0.1 parts. The results are shown in Table 1.

(Example 17)

A water dispersion containing a particulate polymer, a slurry composition for a functional layer, a functional layer-equipped separator, a negative electrode, a positive electrode, and a secondary battery were produced and various measurements and evaluations were performed in the same way as in Example 1 with the exception that in production of the slurry composition for a functional layer in Example 1, boehmite particles (APYRAL AOH60 produced by Nabaltec; particle diameter: 0.9 $\mu$m) were used instead of alumina particles (AKP-3000 produced by Sumitomo Chemical Co., Ltd.; volume-average particle diameter D50: 0.7 $\mu$m) as inorganic particles. The results are shown in Table 2.

(Example 18)

A water dispersion containing a particulate polymer, a slurry composition for a functional layer, a functional layer-equipped separator, a negative electrode, a positive electrode, and a secondary battery were produced and various measurements and evaluations were performed in the same way as in Example 1 with the exception that in production of the slurry composition for a functional layer in Example 1, barium sulfate particles (TS-3 produced by Takehara Kagaku Kogyo Co., Ltd.; particle diameter: 0.6 $\mu$m) were used instead of alumina particles (AKP-3000 produced by Sumitomo Chemical Co., Ltd.; volume-average particle diameter D50: 0.7 $\mu$m) as inorganic particles. The results are shown in Table 2.

(Example 19)

A water dispersion containing a particulate polymer, a slurry composition for a functional layer, a functional layer-equipped separator, a negative electrode, a positive electrode, and a secondary battery were produced and various measurements and evaluations were performed in the same way as in Example 1 with the exception that in production of the slurry composition for a functional layer in Example 1, anionic polyacrylamide (Polystron 117 produced by Arakawa Chemical Industries, Ltd.) was used instead of carboxymethyl cellulose (CMC) as a water-soluble polymer. The results are shown in Table 2.

Note that in Tables 1 and 2, shown below:

"BA" indicates butyl acrylate unit;
"2EHA" indicates 2-ethylhexyl acrylate unit;
"EA" indicates ethyl acrylate unit;
"AN" indicates acrylonitrile unit;
"MAN" indicates methacrylonitrile unit;
"AGE" indicates allyl glycidyl ether unit;
"GMA" indicates glycidyl methacrylate unit;
"AA" indicates acrylic acid unit;
"MAA" indicates methacrylic acid unit;
"AMA" indicates allyl methacrylate unit;
"NMA" indicates N-methylolacrylamide unit;
"CMC" indicates carboxymethyl cellulose; and
"PEG-type" indicates that a surfactant is of a polyethylene glycol type.

[Table 1]

Table 1

| | | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|
| Particulate polymer (binder) | Chemical composition | (Meth) acrylic acid alkyl ester monomer unit | Type | | BA | BA | BA | BA | BA | BA | BA | BA | BA | 2EHA | BA | BA |
| | | | Proportional content [mass%] | | 76.6 | 76 | 66 | 76 | 59.6 | 82.6 | 74.6 | 63.6 | 87.6 | 57.6 | 77.6 | 77.6 |
| | | Cyano group-containing monomer unit | Type | | AN | AN | AN | MAN | AN | AN | AN | AN | AN | AN | AN | AN |
| | | | Proportional content [mass%] | | 10 | 10 | 10 | 5 | 10 | 10 | 10 | 24 | 5 | 15 | 10 | 10 |
| | | Cyclic ether-containing monomer unit | Type | | AGE | AGE | GMA | GMA | GMA | AGE | AGE | AGE | GMA | GMA | AGE | AGE |
| | | | Proportional content [mass%] | | 10 | 10 | 20 | 15 | 28 | 5 | 10 | 10 | 5 | 25 | 10 | 10 |
| | | Carboxyl group-containing monomer unit | Type | | AA | MAA | MAA | MAA | MAA | MAA | MAA | MAA | MAA | MAA | MAA | MAA |
| | | | Proportional content [mass%] | | 3 | 2 | 2 | 2 | 2 | 2 | 5 | 2 | 2 | 2 | 2 | 2 |
| | | Cross-linkable monomer unit | Type | | AMA | AMA | NMA | NMA | AMA | AMA | AMA | AMA | AMA | AMA | AMA | AMA |
| | | | Proportional content [mass%] | | 0.4 | 2 | 2 | 2 | 0.4 | 0.4 | 0.4 | 0.4 | 0.4 | 0.4 | 0.4 | 0.4 |

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Slurry composition | | Volume-average particle diameter [μm] | 0.14 | 0.14 | 0.14 | 0.14 | 0.14 | 0.14 | 0.14 | 0.14 | 0.14 | 0.14 | 0.24 | 0.09 |
| | | Glass-transition temperature [°C] | -9 | -9 | -4 | -10 | -6 | -13 | -9 | 10 | -26 | -7 | -10 | -10 |
| | | Number of glass-transition temperatures | 1 | 1 | 1 | 1 | 1 | 1 | 1 | 1 | 1 | 1 | 1 | 1 |
| | | Gel content [mass%] | 93 | 93 | 96 | 95 | 97 | 91 | 93 | 93 | 88 | 96 | 93 | 92 |
| | | Degree of swelling in electrolyte solution [factor] | 3.8 | 3.8 | 3.2 | 3.5 | 3.2 | 4.7 | 3.8 | 4.3 | 3.8 | 3.0 | 4.0 | 4.0 |
| | | Amount [parts by mass] | 3 | 3 | 3 | 3 | 3 | 3 | 3 | 3 | 3 | 3 | 3 | 3 |
| | Non-conductive particles | Type | Alumina | Alumina | Alumina | Alumina | Alumina | Alumina | Alumina | Alumina | Alumina | Alumina | Alumina | Alumina |
| | | Volume-average particle diameter [μm] | 0.7 | 0.7 | 0.7 | 0.7 | 0.7 | 0.7 | 0.7 | 0.7 | 0.7 | 0.7 | 0.7 | 0.7 |
| | | Amount [parts by mass] | 100 | 100 | 100 | 100 | 100 | 100 | 100 | 100 | 100 | 100 | 100 | 100 |
| | Dispersant | Type | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate |
| | | Amount [parts by mass] | 0.5 | 0.5 | 0.5 | 0.5 | 0.5 | 0.5 | 0.5 | 0.5 | 0.5 | 0.5 | 0.5 | 0.5 |
| | Water-soluble polymer | Type | CMC | CMC | CMC | CMC | CMC | CMC | CMC | CMC | CMC | CMC | CMC | CMC |
| | | Amount [parts by mass] | 1.5 | 1.5 | 1.5 | 1.5 | 1.5 | 1.5 | 1.5 | 1.5 | 1.5 | 1.5 | 1.5 | 1.5 |
| | Surfactant | Type | PEG-type | PEG-type | PEG-type | PEG-type | PEG-type | PEG-type | PEG-type | PEG-type | PEG-type | PEG-type | PEG-type | PEG-type |
| | | Amount [parts by mass] | 0.3 | 0.3 | 0.3 | 0.3 | 0.3 | 0.3 | 0.3 | 0.3 | 0.3 | 0.3 | 0.3 | 0.3 |
| Thickness of functional layer [μm] | | | 3 | 3 | 3 | 3 | 3 | 3 | 3 | 3 | 3 | 3 | 3 | 3 |

EP 4 253 433 A1

(continued)

| Evaluations | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Adhesiveness of functional layer | A | A | A | B | A | A | A | B | A | A | B | A |
| Electrolyte solution affinity of functional layer | A | A | A | A | A | B | A | B | B | A | B | B |
| Heat shrinkage resistance of functional layer | A | A | A | A | A | B | A | A | B | A | A | A |
| Cycle characteristics of secondary battery | A | A | A | A | A | A | A | A | B | A | A | A |

[Table 2]

Table 2

| | | | | | Example 13 | Example 14 | Example 15 | Example 16 | Example 17 | Example 18 | Example 19 | Example 20 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Particulate polymer (binder) | Chemical composition | | (Meth) acrylic acid alkyl ester monomer unit | Type | BA | BA | 2EHA | EA | BA | BA | BA | BA | BA | BA | BA | BA | BA |
| | | | | Proportional content [mass%] | 47.6 | 90.6 | 77.6 | 77.6 | 76.6 | 76.6 | 76.6 | 37.6 | 93.6 | 82.6 | 93 | 92.6 | 79.6 |
| | | | Cyano group-containing monomer unit | Type | AN | AN | AN | AN | AN | AN | AN | AN | AN | AN | AN | - | AN |
| | | | | Proportional content [mass%] | 12 | 2 | 10 | 10 | 10 | 10 | 10 | 15 | 2 | 15 | 5 | - | 10 |
| | | | Cyclic ether-containing monomer unit | Type | GMA | AGE | AGE | AGE | AGE | AGE | AGE | GMA | AGE | - | - | GMA | AGE |
| | | | | Proportional content [mass%] | 38 | 5 | 10 | 10 | 10 | 10 | 10 | 45 | 2 | - | - | 5 | 10 |
| | | | Carboxyl group-containing monomer unit | Type | MAA | MAA | MAA | MAA | AA | AA | AA | MAA | MAA | MAA | MAA | MAA | - |
| | | | | Proportional content [mass%] | 2 | 2 | 2 | 2 | 3 | 3 | 3 | 2 | 2 | 2 | 2 | 2 | - |

(continued)

| Slurry composition | | | Exam-ple 13 | Exam-ple 14 | Exam-ple 15 | Exam-ple 16 | Exam-ple 17 | Exam-ple 18 | Exam-ple 19 | Exam-ple 20 | Comparative Example 1 | Comparative Example 2 | Comparative Example 3 | Comparative Example 4 | Comparative Example 5 |
|---|---|---|---|---|---|---|---|---|---|---|---|---|---|---|---|
| | Cross-linkable mono-mer unit | Type | AMA | AMA | AMA | AMA | AMA | AMA | AMA | AMA | AMA | AMA | - | AMA | AMA |
| | | Proportional content [mass%] | 0.4 | 0.4 | 0.4 | 0.4 | 0.4 | 0.4 | 0.4 | 0.4 | 0.4 | 0.4 | - | 0.4 | 0.4 |
| | Volume-average particle diameter [μm] | | 0.14 | 0.14 | 0.14 | 0.14 | 0.14 | 0.14 | 0.14 | 0.14 | 0.14 | 0.14 | 0.14 | 0.14 | 0.14 |
| | Glass-transition temperature [°C] | | 15 | -30 | -13 | 5 | -11 | -11 | -11 | 20 | -38 | -15 | -34 | -37 | -12 |
| | Number of glass-transition temperatures | | 1 | 1 | 1 | 1 | 1 | 1 | 1 | 1 | 1 | 1 | 1 | 1 | 1 |
| | Gel content [mass%] | | 97 | 87 | 93 | 93 | 93 | 93 | 93 | 97 | 82 | 78 | 72 | 87 | 92 |
| | Degree of swelling in electrolyte solution [factor] | | 2.8 | 3.9 | 3.6 | 3.6 | 4.0 | 4.0 | 4.0 | 3.8 | 4.0 | 6.0 | 4.0 | 3.3 | 3.0 |
| | Amount [parts by mass] | | 3 | 3 | 3 | 3 | 3 | 3 | 3 | 3 | 3 | 3 | 3 | 3 | 3 |
| Non-conductive particles | Type | | Alumina | Alumina | Alumina | Alumina | Boehmite | Barium sulfate | Alumina | Alumina | Alumina | Alumina | Alumina | Alumina | Alumina |
| | Volume-average particle diameter [μm] | | 0.7 | 0.7 | 0.7 | 0.7 | 0.9 | 0.6 | 0.7 | 0.7 | 0.7 | 0.7 | 0.7 | 0.7 | 0.7 |
| | Amount [parts by mass] | | 100 | 100 | 100 | 100 | 100 | 100 | 100 | 100 | 100 | 100 | 100 | 100 | 100 |
| Dispersant | Type | | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate | Na polyacrylate |
| | Amount [parts by mass] | | 0.5 | 0.5 | 0.5 | 0.5 | 0.5 | 0.5 | 0.5 | 0.5 | 0.5 | 0.5 | 0.5 | 0.5 | 0.5 |
| Water-soluble polymer | Type | | CMC | CMC | CMC | CMC | CMC | CMC | Poly acrylamide | CMC | CMC | CMC | CMC | CMC | CMC |
| | Amount [parts by mass] | | 1.5 | 1.5 | 1.5 | 1.5 | 1.5 | 1.5 | 1.5 | 1.5 | 1.5 | 1.5 | 1.5 | 1.5 | 1.5 |

(continued)

| | | | Example 13 | Example 14 | Example 15 | Example 16 | Example 17 | Example 18 | Example 19 | Example 20 | Comparative Example 1 | Comparative Example 2 | Comparative Example 3 | Comparative Example 4 | Comparative Example 5 |
|---|---|---|---|---|---|---|---|---|---|---|---|---|---|---|---|
| | Surfactant | Type | PEG-type | PEG-type | PEG-type | PEG-type | PEG-type | PEG-type | PEG-type | PEG-type | PEG-type | PEG-type | PEG-type | PEG-type | PEG-type |
| | | Amount [parts by mass] | 0.3 | 0.3 | 0.3 | 0.3 | 0.3 | 0.3 | 0.3 | 0.3 | 0.3 | 0.3 | 0.3 | 0.3 | 0.3 |
| Thickness of functional layer [μm] | | | 3 | 3 | 3 | 3 | 3 | 3 | 3 | 3 | 3 | 3 | 3 | 3 | 3 |
| Evaluations | | Adhesiveness of functional layer | B | B | A | B | A | A | A | C | A | B | B | C | B |
| | | Electrolyte solution affinity of functional layer | A | B | B | B | A | A | A | B | C | C | C | C | C |
| | | Heat shrinkage resistance of functional layer | A | B | A | B | A | A | A | B | C | D | D | B | B |
| | | Cycle characteristics of secondary battery | A | B | A | A | A | A | A | A | C | C | C | C | B |

It can be seen from Tables 1 and 2 that it is possible to form a functional layer having excellent heat shrinkage resistance and electrolyte solution affinity using the binders of Examples 1 to 20, which each contain a particulate polymer that includes a cyano group-containing monomer unit, a cyclic ether-containing monomer unit, and a carboxyl group-containing monomer unit and that has a proportional content of cyclic ether-containing monomer units that is not less than a specific value.

On the other hand, it can be seen that heat shrinkage resistance and electrolyte solution affinity of a formed functional layer are both poor when using the binder of Comparative Example 1, which contains a particulate polymer having a proportional content of cyclic ether-containing monomer units that is less than a specific value.

It can also be seen that heat shrinkage resistance and electrolyte solution affinity of a formed functional layer are both poor even when using the binders of Comparative Examples 2 and 3 in which a cyclic ether-containing monomer unit is not included.

It can also be seen that although heat shrinkage resistance of a formed functional layer is good, electrolyte solution affinity of the functional layer is poor when using the binder of Comparative Example 4, which contains a particulate polymer that does not include a cyano group-containing monomer unit.

It can also be seen that although heat shrinkage resistance of a formed functional layer is good, electrolyte solution affinity of the functional layer is poor when using the binder of Comparative Example 5, which contains a particulate polymer that does not include a carboxyl group-containing monomer unit.

INDUSTRIAL APPLICABILITY

According to the present disclosure, it is possible to provide a binder for a secondary battery functional layer that can form a functional layer having excellent heat shrinkage resistance and electrolyte solution affinity.

Moreover, according to the present disclosure, it is possible to provide a slurry composition for a secondary battery functional layer that can form a functional layer having excellent heat shrinkage resistance and electrolyte solution affinity.

Furthermore, according to the present disclosure, it is possible to provide a functional layer for a secondary battery that has excellent heat shrinkage resistance and electrolyte solution affinity.

Also, according to the present disclosure, it is possible to provide a secondary battery that includes this functional layer.

**Claims**

1. A binder for a secondary battery functional layer comprising a particulate polymer, wherein

   the particulate polymer includes a cyano group-containing monomer unit, a cyclic ether-containing monomer unit, and a carboxyl group-containing monomer unit, and
   proportional content of the cyclic ether-containing monomer unit in the particulate polymer is 5 mass% or more.

2. The binder for a secondary battery functional layer according to claim 1, wherein the proportional content of the cyclic ether-containing monomer unit in the particulate polymer is 40 mass% or less.

3. The binder for a secondary battery functional layer according to claim 1 or 2, wherein the particulate polymer has one glass-transition temperature.

4. The binder for a secondary battery functional layer according to any one of claims 1 to 3, wherein the particulate polymer has a glass-transition temperature of 20°C or lower.

5. The binder for a secondary battery functional layer according to any one of claims 1 to 4, wherein proportional content of the cyano group-containing monomer unit in the particulate polymer is not less than 2 mass% and not more than 30 mass%.

6. The binder for a secondary battery functional layer according to any one of claims 1 to 5, wherein proportional content of the carboxyl group-containing monomer unit in the particulate polymer is not less than 0.1 mass% and not more than 10 mass%.

7. The binder for a secondary battery functional layer according to any one of claims 1 to 6, wherein

the particulate polymer further includes a (meth)acrylic acid alkyl ester monomer unit, and
proportional content of the (meth)acrylic acid alkyl ester monomer unit in the particulate polymer is not less than 40 mass% and not more than 92 mass%.

8.  The binder for a secondary battery functional layer according to any one of claims 1 to 7, wherein the particulate polymer has a gel content of 85 mass% or more.

9.  The binder for a secondary battery functional layer according to any one of claims 1 to 8, wherein the particulate polymer has a volume-average particle diameter of not less than 0.05 $\mu$m and not more than 0.25 $\mu$m.

10. A slurry composition for a secondary battery functional layer comprising the binder for a secondary battery functional layer according to any one of claims 1 to 9.

11. The slurry composition for a secondary battery functional layer according to claim 10, further comprising functional particles.

12. The slurry composition for a secondary battery functional layer according to claim 11, wherein the functional particles include non-conductive particles.

13. The slurry composition for a secondary battery functional layer according to claim 12, wherein the non-conductive particles have a volume-average particle diameter of 1.5 $\mu$m or less.

14. A functional layer for a secondary battery formed using the slurry composition for a secondary battery functional layer according to any one of claims 10 to 13.

15. A secondary battery comprising the functional layer for a secondary battery according to claim 14.

## INTERNATIONAL SEARCH REPORT

International application No.

**PCT/JP2021/043080**

### A. CLASSIFICATION OF SUBJECT MATTER

*C08F 220/06*(2006.01)i; *C08F 220/26*(2006.01)i; *C08F 220/44*(2006.01)i; *H01M 4/02*(2006.01)i; *H01M 4/04*(2006.01)i; *H01M 4/13*(2010.01)i; *H01M 4/139*(2010.01)i; *H01M 50/409*(2021.01)i

FI:  H01M50/409; H01M4/13; H01M4/02 Z; H01M4/04 A; H01M4/139; C08F220/44; C08F220/06; C08F220/26

According to International Patent Classification (IPC) or to both national classification and IPC

### B. FIELDS SEARCHED

Minimum documentation searched (classification system followed by classification symbols)

C08F220/06; C08F220/26; C08F220/44; H01M4/02; H01M4/04; H01M4/13; H01M4/139; H01M50/409

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2014/136799 A1 (ZEON CORPORATION) 12 September 2014 (2014-09-12) entire text, all drawings | 1-15 |
| A | WO 2007/122947 A1 (ZEON CORPORATION) 01 November 2007 (2007-11-01) entire text | 1-15 |
| A | WO 2012/043729 A1 (ZEON CORPORATION) 05 April 2012 (2012-04-05) entire text | 1-15 |
| A | JP 2016-72142 A (ASAHI KASEI E-MATERIALS CORP) 09 May 2016 (2016-05-09) entire text | 1-15 |

☐ Further documents are listed in the continuation of Box C.  ☑ See patent family annex.

\*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

INTERNATIONAL SEARCH REPORT
Information on patent family members

International application No.

**PCT/JP2021/043080**

| Patent document cited in search report | | | Publication date (day/month/year) | Patent family member(s) | | | Publication date (day/month/year) |
|---|---|---|---|---|---|---|---|
| WO | 2014/136799 | A1 | 12 September 2014 | (Family: none) | | | |
| WO | 2007/122947 | A1 | 01 November 2007 | US entire text CN KR | 2009/0274958 101454929 10-2008-0104045 | A1 A A | |
| WO | 2012/043729 | A1 | 05 April 2012 | CN entire text KR | 103262297 10-2013-0114152 | A A | |
| JP | 2016-72142 | A | 09 May 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6515574 B